# EUROPEAN PATENT APPLICATION

(11) **EP 1 178 235 A2**
(43) Date of publication of application: **06.02.2002**
(21) Application number: 01306235.1
(22) Date of filing: 19.07.2001
(51) Int. Cl.: F16D 65/12, F16D 65/10

(54) **Long life brake drum and rotor**

(30) Priority: 03.08.2000 US 631860
(71) Applicant: Meritor Heavy Vehicle Technology LLC, Troy, Michigan 48084 (US)
(72) Inventor: Naerheim, Yngve, Thousand Oaks, California 91360 (US)
(74) Representative: Jones, John Bryn

(57) **Abstract**

A rotating frictional brake element (10) is provided that includes a structural member (12) such as a brake rotor or drum constructed from a first metallic material, preferably steel. The structural member may be spin cast in a mold. The structural member has a surface (14). In the case of a brake drum, the surface is an interior cylindrical surface to which brake shoes are applied. In the case of a brake rotor, the surface is spaced apart annular surfaces to which the brake pads are applied. A frictional layer (15) of a second metallic material different than the first metallic material covers the surface for providing a desired friction characteristic. For example, the friction layer may be gray iron that includes wear resistant particles. Preferably, the structural member is spun while the second metallic material is applied to the surface in molten form.

## Description

### BACKGROUND OF THE INVENTION

This invention relates to rotating frictional brake elements such as brake drums and rotors, and more specifically, the invention relates to improving the structural and braking characteristics of the brake elements.

Rotating frictional brake elements such as brake drums and rotor are typically constructed from a single metallic composition. The composition must provide sufficient structural integrity to withstand vibrations and loading during braking. Moreover, the composition must provide desirable braking characteristics, which include the coefficient of friction, thermal conductivity, and wear resistance among other properties.

Gray iron has been the preferred composition for brake rotors and drums because it is one of the better materials when balancing the competing desires of cost effectiveness, structural integrity, and braking characteristics. Inevitably, brake rotors and drums degrade over time due to wear. Furthermore, brake drums used in heavy-duty applications are particularly susceptible to cracking. Of course, it is desirable to provide a long life brake drum or rotor to decrease the frequency of replacement. By manufacturing brake rotors and drums from one material, gray iron, structural integrity and braking characteristics are compromised and the life of the component is decreased. Therefore, what is needed is a brake drum or rotor for which structural integrity .and braking characteristics may be separately optimized and a method of manufacturing the same.

### SUMMARY OF THE INVENTION AND ADVANTAGES

The present invention provides a rotating frictional brake element that includes a structural member such as a brake rotor or drum constructed from a first metallic material, preferably steel. The structural member may be spin cast in a mold. The structural member has a surface. In the case of a brake drum, the surface is an interior cylindrical surface to which brake shoes are applied. In the case of a brake rotor, the surface is spaced apart annular surfaces to which the brake pads are applied. A frictional layer of a second metallic material different than the first metallic material covers the surface for providing a desired friction characteristic. For example, the friction layer may be gray iron that includes wear resistant particles. Preferably, the structural member is spun while the second metallic material is applied to the surface in molten form.

Accordingly, the above invention provides a brake drum or rotor for which structural integrity and braking characteristics may be separately optimized and a method of manufacturing the same.

### BRIEF DESCRIPTION OF THE DRAWINGS

Other advantages of the present invention can be understood by reference to the following detailed description when considered in connection with the accompanying drawings wherein:
Figure 1 is a perspective view of a brake drum of the present invention;
Figure 2 is a perspective view of a brake rotor of the present invention; and
Figure 3 is a partial elevational view of a brake drum being formed using the present invention method.

### DETAILED DESCRIPTION OF THE PREFERRED EMBODIMENT

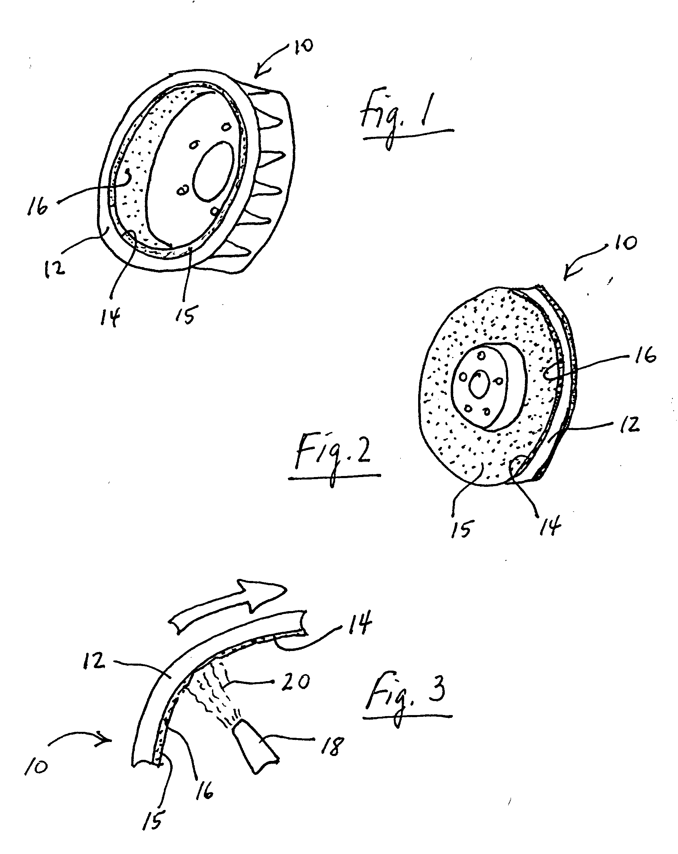

A rotating frictional brake element 10 is shown in Figures 1 and 2. Referring to Figure 1, the rotating frictional brake element 10 is a brake drum. The brake drum includes a structural member 12, preferably manufactured from steel, which provides improved structural integrity over gray iron. The structural member 12 may be formed using any known process. One preferred process is spin casting in which molten metal is deposited on a spinning mold. The structural member 12 includes an interior cylindrical surface 14 to which brake shoes are applied during a braking maneuver. However, the brake shoes are not applied directly to the surface 14. Instead, a frictional layer 15 is deposited onto the surface 14 for providing properties that are different than the material from which the structural member 12 is constructed. Preferably, the frictional layer 15 consists primarily of gray iron. Wear resistant particle 16 such as silicon carbide, aluminum oxide, or titanium carbide may be added to the frictional layer 15 to further improve the wear resistance of the frictional layer 15. Other carbides, oxides, or nitrides may also be used. Particles 16 may also be added to modify the coefficient of friction, thermal conductivity, and other braking characteristics of the frictional layer.

A brake rotor 10, as shown in Figure 2, is constructed in a similar manner to the brake drum shown in Figure 1 and described above. The rotor 10 includes a structural member 12 and opposing annular surfaces 14. Brake pads are applied to the annular surfaces 14 during a braking maneuver. Frictional layer 15 containing characteristic modifying particles 16 are applied to the annular surfaces 14. As shown in Figure 3, the frictional layer 15 may be applied to the structural member 12 by a spin casting process. The structural member 12 is spun while molten material 20 is applied to the surface 14 by a nozzle 18. In this manner, a thin, uniform frictional layer 15 may be applied to the surface 14. Accordingly, the present invention provides a structural member 12 with improved structural integrity. Furthermore, a frictional layer is provided having braking characteristics separate from the characteristics of the material used for the structural member. As a result, the structural integrity and braking characteristics may be separately optimized.

The invention has been described in an illustrative manner, and it is to be understood that the terminology that has been used is intended to be in the nature of words of description rather than of limitation. Obviously, many modifications and variations of the present invention. are possible in light of the above teachings. It is, therefore, to be understood that within the scope of the appended claims the invention may be practiced otherwise than as specifically described.

## Claims

1. A rotating frictional brake element (10) comprising:
a structural member (12) of a first metallic material having a surface (14); and
a frictional layer (15) of a second metallic material different than said first metallic material covering said surface for providing a desired friction characteristic.

2. The brake element as set forth in claim 1, wherein said structural member is spin cast.

3. The brake element as set forth in claim 1 or 2, wherein said frictional layer consists essentially of gray iron.

4. The brake element as set forth in claims 1 to 3, wherein said frictional layer is spin cast onto said surface.

5. A method of forming a rotating frictional brake element (10) comprising the steps of:
a) forming a metallic structural member (12) having a surface;
b) spinning the structural member; and
c) applying a molten metallic frictional layer to the surface.

6. The method as set forth in claim 5, step a) comprises spin casting the structural member.

7. The method as set forth in claim 5 or 6, wherein the molten metallic frictional layer consists essentially of gray iron.

8. The brake element or method as defined in any preceding claim, wherein said structural member comprises a brake drum (10, figure 1) and wherein said surface comprises an interior cylindrical surface.

9. The brake element or method as defined in claims 1 to 7, wherein said structural member comprises a brake rotor (10, figure 2) and wherein said surface comprises spaced apart annular surfaces.

10. The brake element or method as defined in any preceding claim, wherein said structural member consists essentially of steel.

11. The brake element or method as defined in any preceding claim, wherein said frictional layer includes wear resistant particles.

12. The brake element or method as defined in claim 11, wherein said wear resistant particles are selected from a group consisting of:
silicon carbide, aluminum oxide, and titanium carbide.
